# EUROPÄISCHE PATENTSCHRIFT

(11) **EP 1 663 712 B1**
(45) Veröffentlichungstag und Bekanntmachung des Hinweises auf die Patenterteilung: **29.10.2008**
(21) Anmeldenummer: 04764407.5
(22) Anmeldetag: 24.08.2004
(51) Int. Cl.: B60Q 3/02

(54) **VERKLEIDUNGSTEIL MIT INTEGRIERTER LICHTQUELLE, INSBESONDERE DACHHIMMEL**
FITTING WITH AN INTEGRATED LIGHT SOURCE, ESPECIALLY A ROOF LINER
PIECE DE REVETEMENT A SOURCE LUMINEUSE INTEGREE, NOTAMMENT PLAFOND

(30) Priorität: 05.09.2003 DE 10341409
(43) Veröffentlichungstag der Anmeldung: 07.06.2006
(73) Patentinhaber: Johnson Controls GmbH, 51399 Burscheid (DE)
(72) Erfinder: MÜLLER, Wolfgang, 42929 Wermelskirchen (DE); VISSERS, Johan, NL-4872 SX Etten-Leur (NL); NDAGIJIMANA, Robin, 41469 Neuss (DE)
(74) Vertreter: Schwöbel, Karl T.
(86) Internationale Anmeldenummer: PCT/EP2004/009427
(87) Internationale Veröffentlichungsnummer: WO 2005/028251

(56) Entgegenhaltungen:
- EP-A- 1 293 382
- WO-A-01/90634
- DE-A- 10 135 478
- DE-A- 19 936 982
- FR-A- 2 830 493
- US-A- 3 852 585
- US-A- 5 641 221

## Beschreibung

Die Erfindung betrifft ein Verkleidungsteil, insbesondere einen Dachhimmel für den Innenraum eines Kraftfahrzeugs, mit einer flächigen Lichtquelle.

### Stand der Technik

Aus der Praxis ist bekannt, Dachhimmel für hochwertige Kraftfahrzeuge mit einer den Innenraum beleuchtenden flächigen Lichtquelle in Form von Elektrolumineszenzfolien zu versehen, die aus optischen Gründen mit einem teiltransparenten Dekormaterial überzogen sind.

Derartige Verkleidungsteile verleihen dem Innenraum eine außerordentliche Wertanmutung, sind jedoch nur mit erheblichen Aufwand zu fertigen. Wegen des Dekorüberzugs dienen diese Lichtquellen im Wesentlichen der Verbesserung des Ambiente, nicht jedoch einer Ausleuchtung des Innenraums.

Ferner ist aus der Druckschrift US 5 641 221 A ein beleuchtetes Anzeigefeld bekannt, welches beispielsweise im Bereich einer Türeintrittsschwelle angeordnet ist und einen beleuchtbaren Schriftzug oder dergleichen aufweist.

### Aufgabe

Der Erfindung liegt die Aufgabe zugrunde, einen gattungsgemäßen Dachhimmel anzubieten, der optisch ansprechend sowie einfach zu fertigen ist und zur gleichmäßigen Ausleuchtung des Innenraums geeignet ist.

### Lösung

Die Aufgabe wird erfindungsgemäß durch ein Verkleidungsteil gemäß Anspruch 1 gelöst.

Aus Fertigungsgründen sowie mit Blick auf seine Erwärmung ist das Leuchtmittel vorzugsweise jenseits, also auf der der Sichtseite gegenüberliegenden Flächenseite des Verkleidungsteils angeordnet. Dabei kann zwischen der Stirnfläche des plattenförmigen Lichtleiters und dem Leuchtmittel eine Vorrichtung zur Lichtübertragung angeordnet sein.

Erfindungsgemäß weist das Verkleidungsteil einen von der Sichtseite wegweisenden Versatz auf, innerhalb dessen der plattenförmige Lichtleiter derart angeordnet ist, dass er bündig zur Sichtseite des Versatzes verläuft, wobei jedoch ein Teil seiner Stirnfläche über das übrige Verkleidungsteil herausragt.

In diesem Fall erstreckt sich der plattenförmige Lichtleiter im Bereich der herausragenden Stirnfläche mit Vorteil bis jenseits des Verkleidungsteils, ist also teilweise hinter diesem verborgen. Dadurch können im Bereich der Lichteinspeisung auftretende Abstrahlungsinhomogenitäten verdeckt werden.

Besondere Bedeutung erlangt diese Ausbildung, wenn der Absatz im Bereich des plattenförmigen Lichtleiters aus gestalterischen Gründen bogenförmig ausgebildet ist, da ein plattenförmige Lichtleiter in bogenförmigen Randbereichen in Abhängigkeit vom Bogenradius Zonen geringerer Ausleuchtung aufweisen kann. Dadurch, dass der plattenförmige Lichtleiter eine rechteckige Kontur besitzt und bereichsweise von dem bogenförmig ausgeschnittenen Verkleidungsteil verdeckt wird, kann die Gestaltungsfreiheit erhöht worden. Das gleiche gilt sinngemäß für andere, mit Blick auf die Lichtverteilung kritische Geometrien.

Besonders attraktiv wirkt das Verkleidungsteil, wenn es im Bereich des Absatzes in Sektionen unterteilt ist, die gegebenenfalls herauslösbar ausgebildet sind und durch optisch und/oder technisch andersartige Sektionen ersetzbar sind. Auf diese Weise kann ein Fahrzeug nachträglich eine Aufwertung erfahren, beispielsweise durch den Einbau von Sektionen mit einem höherwertigen Dekormaterial oder einem intergrierten, ausklappbaren Bildschirm.

### Figuren

Die Figuren 3 bis 5 stellen beispielhaft und schematisch verschiedene Ausführungsformen der Erfindung dar. Die Figuren 1 und 2 dienen lediglich der Erläuterung des technischen Zusammenhangs.

Es zeigen:
- Fig. 1: einen innenraumseitigen Blick auf ein Verkleidungsteil in Form eines Dachhimmels
- Fig. 2: einen Längsschnitt durch eine erste Ausbildung des in Fig. 1 gezeigten Dachhimmels
- Fig. 3: eine innenraumseitige Ansicht eines anderen erfindungsgemäßen Dachhimmels
- Fig. 4: einen Längsschnitt durch den Dachhimmel nach Fig. 3
- Fig. 5: den Dachhimmel nach Fig. 3 und 4 mit Blick auf seine Rückseite

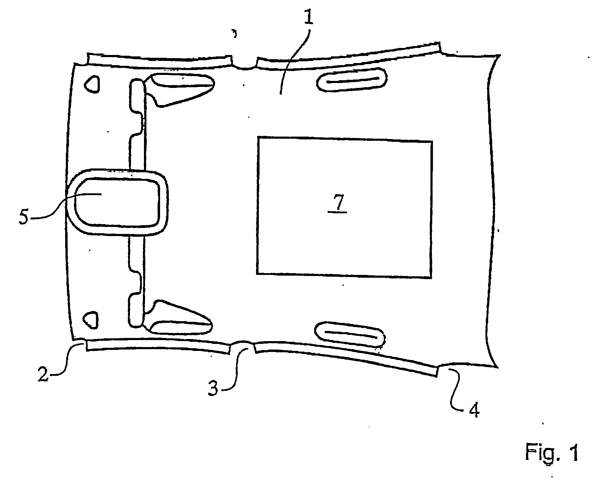

Der in Fig. 1 abgebildete Dachhimmel 1 besteht aus einem dreidimensional verformten, flächigen Halbzeug, an welches verschiedene Funktionsbereiche, beispielsweise Übergänge 2 bis 4 zu den A-, B- und C-Säulen des Fahrzeugs oder eine Konsole 5, angeformt sind.

Über den Rücksitzen ist ein zum Innenraum 6 des Fahrzeugs hin abstrahlender (Pfeile), plattenförmiger Lichtleiter 7 angeordnet, der gleichfalls eine der Gestalt des Dachhimmels folgende Wölbung aufweisen kann.

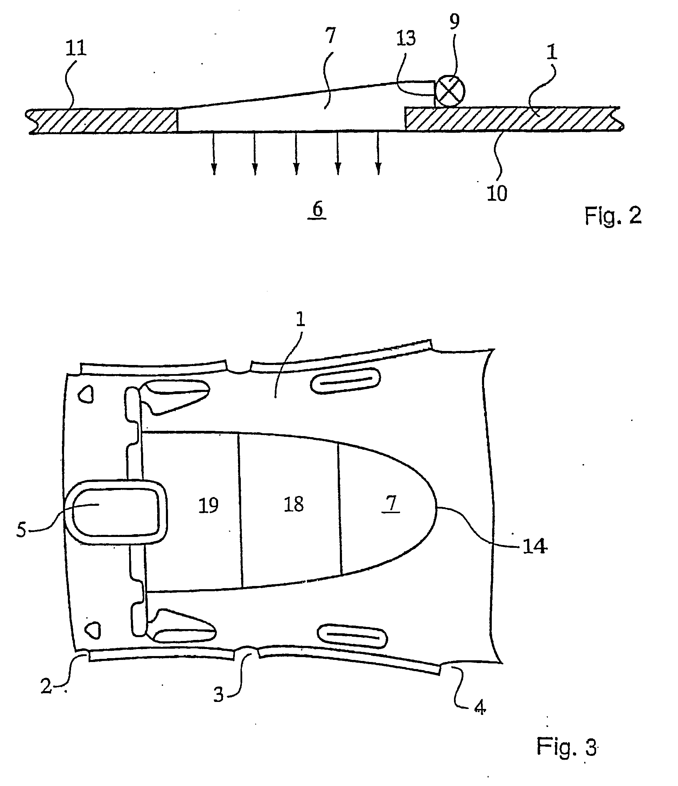

Bei der Darstellung nach Figur 2 ist der Lichtleiter 7 sichtseitig bündig im Dachhimmel angeordnet, ragt jedoch örtlich über die rückwärtige Flächenseite 11 des Dachhimmels 1 heraus und steht über seine Stirnfläche 13 unmittelbar mit einem Leuchtmittel 9 in Wirkung. Der Ort der Lichteinspeisung, nämlich die Stirnfläche 13, ist somit gegenüber dem vom Innenraum her sichtbaren Bereich des Lichtleiters beabstandet. Keilförmige Flächenbereiche inhomogener Leuchtstärke, die am Einspeiseort auftreten (hell im Bereich der Leuchtmittel 9, dunkel in den Zwischenräumen), sind aus dem Sichtfeld herausgenommen und daher nicht mehr störend.

Es versteht sich, dass die Lichteinspeisung auch durch eine zwischen Lichtleiter 7 und Leuchtmittel 9 angeordnete Vorrichtung zur Lichtübertragung, beispielsweise einen Glasfaserstrang, erfolgen kann.

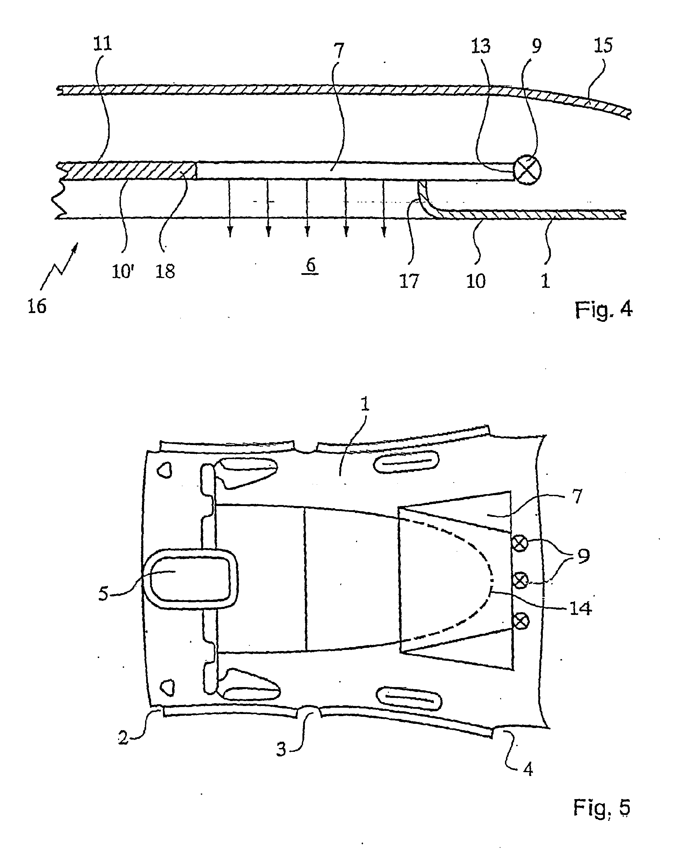

Fig. 3 zeigt einen optisch besonders ansprechenden Dachhimmel 1, bei dem die sichtbare Erstreckung des plattenförmige Lichtleiter 7 im hinteren Bereich eine Bogenkontur 14 aufweist. Wie aus Fig. 4 ersichtlich, ist der Dachhimmel 1 mit einem von der Sichtseite weg weisenden und sich damit in Richtung des Fahrzeugdachs 15 wölbenden Absatz 16 versehen, in welchen der plattenförmige Lichtleiter 7 bündig zur Sichtseite 10' eingelassen ist. Der Übergang zum verbleibenden Teil des Dachhimmels 1 wird durch einen umlaufenden Kragen 17 gebildet, auf welchem der plattenförmige Lichtleiter 7 aufliegt und über welchen er in der Weise hinausragt, dass der Dachhimmel ihn bereichsweise verdeckt.

Wie aus Fig. 5 ersichtlich, kann der plattenförmige Lichtleiter 7 somit eine viereckige Gestalt aufweisen, während er durch einen entsprechenden Verlauf des Kragens 17 vom Innenraum her (Fig. 4) bogenförmig begrenzt ist.

Der Absatz 16 weist neben dem plattenförmigen Lichtleiter 7 noch herauslösbare Sektionen 18, 19 auf, die gleichfalls auf dem Kragen 17 aufliegen und durch die sichtbare Gliederung einerseits die Optik des Dachhimmels 1 verbessern und andererseits seine Variabilität erhöhen, wie zuvor beschrieben.

### Bezugszeichen

- 1: Dachhimmel
- 2, 3, 4: Übergänge (zu den A- bis C-Säulen)
- 5: Konsole
- 6: Innenraum
- 7: Lichtleiter (plattenförmig)
- 9: Leuchtmittel
- 10: Sichtseite
- 11: Flächenseite (der Sichtseite gegenüberliegend)
- 12: Ausschnitt
- 13: Stirnfläche
- 14: Bogenkontur
- 15: Fahrzeugdach
- 16: Absatz
- 17: Kragen
- 18,19: Sektionen

## Patentansprüche

1. Verkleidungsteil, insbesondere Dachhimmel (1) für den Innenraum (6) eines Kraftfahrzeugs, mit einer flächigen Lichtquelle, wobei die Lichtquelle einen zur Sichtseite (10) abstrahlenden, plattenförmigen Lichtleiter (7) aufweist, wobei die Stirnfläche (13) des plattenförmigen Lichtleiters (7) zumindest bereichsweise über die der Sichtseite (10) gegenüberliegende Flächenseite (11) des Verkleidungsteils herausragt und mit einem Leuchtmittel (9) in Wirkzusammenhang steht, **dadurch gekenneichnet, dass** Verkleidungsteil einen von der Sichtseite (10) weg weisenden Versatz (16) aufweist, innerhalb dessen der plattenförmige Lichtleiter (7) derart angeordnet ist, dass er bündig zur Sichtseite (10) des Versatzes (16) verläuft, wobei jedoch ein Teil seiner Stirnfläche (13) über das übrige Verkleidungsteil herausragt.

2. Verkleidungsteil nach Anspruch 1, **dadurch gekennzeichnet, dass** das Leuchtmittel (9) jenseits des Verkleidungsteils angeordnet ist.

3. Verkleidungsteil nach Anspruch 1 oder 2, **dadurch gekennzeichnet, dass** der plattenförmige Lichtleiter (7) zumindest bereichsweise bündig zur Sichtseite des Verkleidungsteils verläuft.

4. Verkleidungsteil nach Anspruch 3, **dadurch gekennzeichnet, dass** der plattenförmige Lichtleiter (9) rundum bündig zur Sichtseite (10) des Verkleidungsteils verläuft und zumindest partiell eine größere Dicke als das Verkleidungsteil aufweist.

5. Verkleidungsteil nach einem der vorhergehenden Patentansprüche, **dadurch gekennzeichnet, dass** sich der plattenförmige Lichtleiter (7) im Bereich der herausragenden Stirnfläche (13) bis jenseits des Verkleidungsteils erstreckt.

6. Verkleidungsteil nach einem der vorhergehenden Patentansprüche, **dadurch gekennzeichnet, dass** der Absatz (16) im Bereich des plattenförmigen Lichtleiters (7) bogenförmig ausgebildet ist.

7. Verkleidungsteil nach einem der vorhergehenden Patentansprüche, **dadurch gekennzeichnet, dass** das Verkleidungsteil im Bereich des Absatzes (16) in herauslösbare Sektionen (18), (19) unterteilt ist.

## Claims

1. A fitting, especially a roof liner (1) for the interior (6) of a motor vehicle, with a flat light source, the light source having a plate-like light guide (7) radiating light to the visible side (10), the end surface (13) of the plate-like light guide (7) protruding at least in some regions over the flat side (11) of the fitting, which side is opposite the visible side (10), and actively cooperating with a means of illumination (9), **characterized in that** the fitting has an offset (16) which points away from the visible side (10) and within which the plate-like light guide (7) is arranged in such a manner that it runs flush with the visible side (10) of the offset (16), however with part of its end surface (13) protruding over the rest of the fitting.

2. Fitting according to Claim 1, **characterized in that** the means of illumination (9) is arranged on the other side of the fitting.

3. Fitting according to Claim 1 or 2, **characterized in that** the plate-like light guide (7) runs at least in some regions flush with the visible side of the fitting.

4. Fitting according to Claim 3, **characterized in that** the plate-like light guide (9) runs all the way around flush with the visible side (10) of the fitting and at least partially has a greater thickness than the fitting.

5. Fitting according to one of the preceding claims, **characterized in that** the plate-like light guide (7) extends in the region of the protruding end surface (13) until on the other side of the fitting.

6. Fitting according to one of the preceding claims, **characterized in that** the offset (16) in the region of the plate-like light guide (7) is of curved design.

7. Fitting according to one of the preceding claims, **characterized in that** the fitting is divided in the region of the offset (16) into removable sections (18), (19).

## Revendications

1. Pièce de revêtement, en particulier plafond (1) pour l'habitacle (6) d'un véhicule automobile, comprenant une source de lumière plane, la source de lumière présentant un guide de lumière (7) en forme de plaque, rayonnant vers le côté visible (10), la surface frontale (13) du guide de lumière (7) en forme de plaque faisant saillie au moins en partie au-dessus du côté de la surface (11) de la pièce de revêtement opposé au côté visible (10) et étant en coopération fonctionnelle avec un moyen d'éclairage (9), **caractérisée en ce que** la pièce de revêtement présente un déport (16) opposé au côté visible (10), à l'intérieur duquel le guide de lumière (7) en forme de plaque est disposé, de telle sorte qu'il s'étende en affleurement avec le côté visible (10) du déport (16), une partie de sa surface frontale (13) faisant toutefois saillie au-dessus du reste de la pièce de revêtement.

2. Pièce de revêtement selon la revendication 1, **caractérisée en ce que** le moyen d'éclairage (9) est disposé de chaque côté de la pièce de revêtement.

3. Pièce de revêtement selon la revendication 1 ou 2, **caractérisée en ce que** le guide de lumière (7) en forme de plaque s'étend au moins en partie en affleurement jusqu'au côté visible de la pièce de revêtement.

4. Pièce de revêtement selon la revendication 3, **caractérisée en ce que** le guide de lumière (7) en forme de plaque s'étend tout autour en affleurement avec le côté visible (10) de la pièce de revêtement et présente au moins en partie une plus grosse épaisseur que la pièce de revêtement.

5. Pièce de revêtement selon l'une quelconque des revendications précédentes, **caractérisée en ce que** le guide de lumière (7) en forme de plaque s'étend dans la région de la surface frontale (13) en saillie jusqu'à chaque côté de la pièce de revêtement.

6. Pièce de revêtement selon l'une quelconque des revendications précédentes, **caractérisée en ce que** le déport (16) est réalisé en forme d'arc dans la région du guide de lumière (7) en forme de plaque.

7. Pièce de revêtement selon l'une quelconque des revendications précédentes, **caractérisée en ce que** la pièce de revêtement est divisée en sections (18), (19), pouvant être ressorties dans la région du déport (16).
